(19) **Europäisches Patentamt**
**European Patent Office**
**Office européen des brevets**

(11) **EP 4 612 035 B1**

(12) **FASCICULE DE BREVET EUROPEEN**

(45) Date de publication et mention
de la délivrance du brevet:
**03.06.2026 Bulletin 2026/23**

(21) Numéro de dépôt: **23793928.5**

(22) Date de dépôt: **06.10.2023**

(51) Classification Internationale des Brevets (IPC):
***B60W 30/16*** (2020.01)      ***B60W 30/18*** (2012.01)

(52) Classification Coopérative des Brevets (CPC):
**B60W 30/16; B60W 30/18163;** B60W 2420/403;
B60W 2520/10; B60W 2540/20; B60W 2552/53;
B60W 2554/4042; B60W 2720/10; B60W 2720/125

(86) Numéro de dépôt international:
**PCT/FR2023/051566**

(87) Numéro de publication internationale:
**WO 2024/094942 (10.05.2024 Gazette 2024/19)**

(54) **PROCÉDÉ ET DISPOSITIF DE CONTRÔLE D'UN SYSTÈME DE RÉGULATION ADAPTATIVE DE VITESSE D'UN VÉHICULE CHANGEANT DE VOIE DE CIRCULATION**

VERFAHREN UND VORRICHTUNG ZUR STEUERUNG EINES ADAPTIVEN GESCHWINDIGKEITSREGELSYSTEMS EINES FAHRSPURWECHSELNDEN FAHRZEUGS

METHOD AND DEVICE FOR CONTROLLING AN ADAPTIVE CRUISE CONTROL SYSTEM OF A VEHICLE THAT IS CHANGING TRAFFIC LANE

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **03.11.2022 FR 2211441**

(43) Date de publication de la demande:
**10.09.2025 Bulletin 2025/37**

(73) Titulaire: **Stellantis Auto SAS
78300 Poissy (FR)**

(72) Inventeur: **VIVET, Luc
75016 PARIS 16 (FR)**

(74) Mandataire: **ESIP
Stellantis Auto SAS
Service REIP - YT800
43, rue Jean Pierre Timbaud
78300 Poissy (FR)**

(56) Documents cités:
**US-A- 5 999 874          US-A1- 2003 163 239
US-A1- 2017 123 430**

## Description

### Domaine technique

La présente invention concerne les procédés et dispositifs de contrôle d'un système de régulation adaptative de vitesse d'un véhicule, notamment un véhicule automobile. La présente invention concerne également un procédé et un dispositif de régulation de vitesse d'un véhicule. La présente invention concerne également un procédé et un dispositif de contrôle d'un véhicule, notamment un véhicule autonome.

### Arrière-plan technologique

Certains véhicules contemporains sont équipés de fonctions ou système(s) ou d'aide à la conduite, dit ADAS (de l'anglais « Advanced Driver-Assistance System » ou en français « Système d'aide à la conduite avancé »).

Parmi ces systèmes, le système de régulation adaptative de vitesse, dit ACC (de l'anglais « Adaptive Cruise Control ») a pour fonction première la régulation automatiquement, de façon adaptative, de la vitesse des véhicules qui en sont équipés en fonction de leur environnement. Un tel système ACC détermine une ou plusieurs consignes d'accélération en fonction d'une consigne de vitesse et d'informations relatives à l'environnement du véhicule, la ou les consignes d'accélération étant propres à réguler la vitesse du véhicule de façon adaptative, c'est-à-dire en tenant compte de l'environnement du véhicule.

Ces informations d'environnement correspondent par exemple à la distance entre le véhicule équipé du système ACC et un véhicule circulant devant, à la vitesse (par exemple relative) du véhicule circulant devant, à l'accélération du véhicule circulant devant et/ou à une vitesse limite réglementaire. La ou les consignes d'accélération sont par exemple déterminées à partir d'une loi de commande basée sur des estimations du couple fourni par un groupe motopropulseur (par exemple un moteur thermique ou électrique) à une ou plusieurs roues du véhicule et de l'accélération courante du véhicule.

Les informations d'environnement d'un véhicule sont par exemple obtenues de capteurs embarqués dans le véhicule, tels que des radars par exemple. Ces informations sont particulièrement importantes pour un véhicule, par exemple pour améliorer la sécurité du véhicule en prenant en compte l'environnement qui l'entoure, notamment les autres véhicules.

Le confort des passagers d'un véhicule est un autre facteur important, notamment pour l'acceptation des systèmes d'aide à la conduite des véhicules. Par exemple, dans certaines situations de vie du véhicule, par exemple lorsqu'un véhicule roulant sous le contrôle d'un système ACC souhaite changer de voie de circulation, le système ACC peut s'avérer limitant pour le conducteur en imposant une régulation de la vitesse qui n'est pas parfaitement adaptée à la situation. Le compromis entre une certaine souplesse dans le contrôle de la vitesse et la sécurité des passagers est parfois difficile à trouver.

Des systèmes des régulation adaptative de vitesse sont connus de US 2003/163239 A1, US 5 999 874 A, US 2017/123430 A1.

### Résumé de la présente invention

Un objet de la présente invention est de résoudre au moins l'un des problèmes de l'arrière-plan technologique décrit précédemment.

Un autre objet de la présente invention est d'améliorer le fonctionnement d'un système ACC d'un véhicule.

Selon un premier aspect, la présente invention concerne un procédé de contrôle d'un système de régulation adaptative de vitesse, dit système ACC, d'un premier véhicule, le premier véhicule circulant sur une première voie de circulation d'une portion de route comprenant en outre une deuxième voie de circulation adjacente à la première voie de circulation, le procédé comprenant les étapes suivantes :

- détection d'un déclenchement d'au moins un clignotant du premier véhicule, le déclenchement étant représentatif d'une indication de changement de voie de circulation depuis la première voie de circulation vers la deuxième voie de circulation ;
- détermination d'un point d'intersection entre une ligne de marquage au sol séparant la première voie de circulation de la deuxième voie de circulation et une trajectoire du premier véhicule représentative du changement de voie de circulation ;
- détermination d'une portion de la deuxième voie de circulation comprise entre une position courante du premier véhicule et le point d'intersection ;
- détection d'un deuxième véhicule circulant dans la portion de la deuxième voie de circulation ;
- sélection du deuxième véhicule comme véhicule cible dudit système ACC en fonction d'un résultat d'une comparaison entre d'une part une vitesse courante du deuxième véhicule avec une vitesse courante du premier véhicule ajustée d'une valeur de vitesse déterminée et d'autre part une valeur représentative d'un temps inter-véhicules courant entre le premier véhicule et le deuxième véhicule, dite valeur de TIV courant, avec une valeur seuil déterminée ;
- contrôle du système ACC en fonction d'un résultat de la sélection.

La détection du déclenchement d'un clignotant permet de détecter une intention du conducteur du premier véhicule de changer de voie pour passer de la première voie de circulation à la deuxième voie de circulation. La détermination d'une deuxième portion de route en fonction de la trajectoire du premier véhicule pour changer de voie de circulation permet de gérer les situations dans lesquelles un deuxième véhicule circule dans cette portion de voie adjacente à la position courante du premier véhicule, en gérant la sélection de ce deuxième véhicule comme véhicule cible du système ACC du premier véhicule en fonction des vitesses respectives des premier et deuxième véhicules d'une part et du TIV courant entre les deux véhicules d'autre part. Un tel procédé permet par exemple de gérer les situations délicates où le deuxième véhicule circule dans la zone adjacente au premier véhicule avec une vitesse proche de celle du premier véhicule.

Un tel procédé permet d'améliorer le fonctionnement du système ACC en gérant les situations de vie particulières pour lesquelles le premier véhicule va changer de voie de circulation avec un deuxième véhicule présent dans la voie de circulation de destination du changement de voie de circulation.

Selon une variante, le deuxième véhicule est sélectionné comme véhicule cible du système ACC lorsque :

- la vitesse courante du deuxième véhicule est supérieure à la vitesse courante du premier véhicule ajustée de la valeur de vitesse déterminée ; et
- la valeur de TIV courant est supérieure à la valeur seuil déterminée.

Selon une autre variante, lorsque le deuxième véhicule est sélectionné comme véhicule cible du système ACC, le contrôle dudit système ACC comprend une régulation de vitesse du premier véhicule avec une valeur de TIV égale au minimum entre la valeur de TIV courant et une valeur représentative d'un temps inter-véhicules de consigne du système ACC.

Selon une variante supplémentaire, la valeur de vitesse déterminée est fonction d'un type de la deuxième voie de circulation, le type de la voie de circulation correspondant à :

- 'plus rapide' pour une deuxième voie de circulation plus rapide que la première voie de circulation ; ou
- 'moins rapide' pour une deuxième voie de circulation moins rapide que la première voie de circulation.

Selon encore une variante, une valeur de vitesse déterminée pour une deuxième voie de circulation de type 'plus rapide' est supérieure à une valeur de vitesse déterminée pour une deuxième voie de circulation de type 'moins rapide'.

Selon une variante additionnelle, le procédé comprend en outre les étapes de :

- détection de la ligne de marquage au sol à partir de données caméra obtenues d'au moins une caméra embarquée dans le premier véhicule ; et

- détermination de la trajectoire en fonction de données représentatives d'une accélération latérale du premier véhicule et de données représentatives d'une vitesse longitudinale du premier véhicule.

Selon une autre variante, la valeur de vitesse déterminée est égale à -5 km/h ou à -10 km/h, et/ou la valeur seuil déterminée est égale à 0.4 s ou 0.5 s.

Selon un deuxième aspect, la présente invention concerne un dispositif de contrôle d'un système de régulation adaptative de vitesse de véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

## Brève description des figures

D'autres caractéristiques et avantages de la présente invention ressortiront de la description des exemples de réalisation particuliers et non limitatifs de la présente invention ci-après, en référence aux figures 1 à 3 annexées, sur lesquelles :

[Fig. 1] illustre schématiquement un premier véhicule circulant sur une première voie de circulation d'une portion de route à plusieurs voies de circulation, selon un exemple de réalisation particulier et non limitatif de la présente invention ;

[Fig. 2] illustre schématiquement un dispositif configuré pour contrôler un système de régulation adaptative de vitesse du premier véhicule de la figure 1, selon un exemple de réalisation particulier et non limitatif de la présente invention ;

[Fig. 3] illustre un organigramme des différentes étapes d'un procédé de contrôle d'un système de régulation adaptative de vitesse du premier véhicule de la figure 1, selon un exemple de réalisation particulier et non limitatif de la présente invention.

## Description des exemples de réalisation

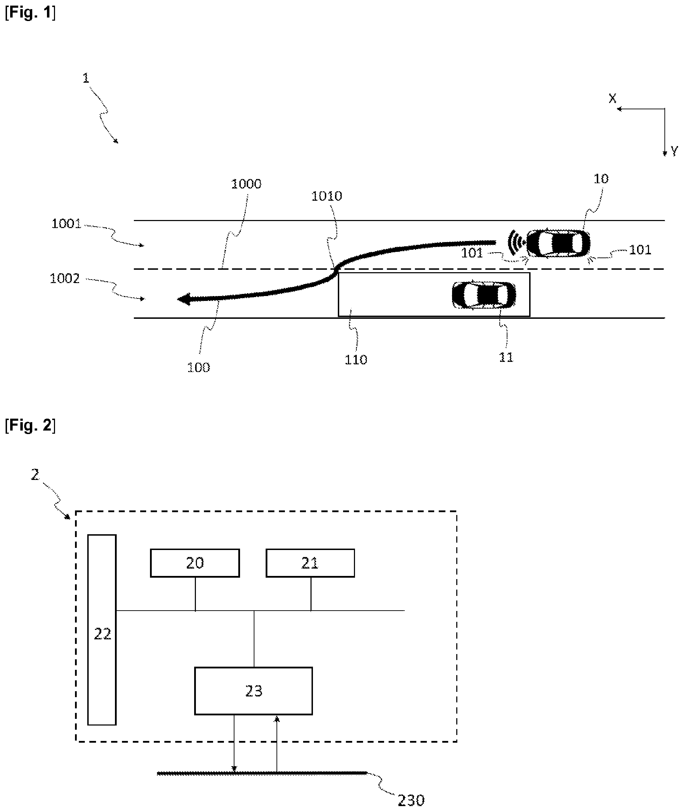

Un procédé et un dispositif de contrôle d'un système de régulation adaptative de vitesse d'un véhicule vont maintenant être décrits dans ce qui va suivre en référence conjointement aux figures 1 à 3. Des mêmes éléments sont identifiés avec des mêmes signes de référence tout au long de la description qui va suivre.

Selon un exemple particulier et non limitatif de réalisation de la présente invention, le contrôle d'un système de régulation adaptative de vitesse, dit système ACC, d'un premier véhicule comprend la détection du déclenchement d'un ou plusieurs clignotants du premier véhicule. Suivant cette détection, un point d'intersection est déterminé ou estimé entre une ligne de marquage au sol séparant la première voie de circulation d'une deuxième voie de circulation adjacente à la première voie et une trajectoire du premier véhicule représentative du changement de voie de circulation. Une zone correspondant à la partie ou portion de la deuxième voie de circulation est déterminée à partir du point d'intersection et de la position courante du premier véhicule, cette zone correspondant au tronçon de deuxième voie de circulation compris entre le point d'intersection et la position du premier véhicule, par exemple l'avant du premier véhicule. Un deuxième véhicule présent dans cette portion est détecté, par exemple par un ou plusieurs capteurs embarqués dans le premier véhicule, par exemple par un ou plusieurs radars. Ce deuxième véhicule est sélectionné comme véhicule cible du système ACC ou non en fonction d'un résultat d'une comparaison entre d'une part une vitesse courante du deuxième véhicule avec une vitesse courante du premier véhicule ajustée d'une valeur de vitesse déterminée et d'autre part une valeur représentative d'un temps inter-véhicules courant entre le premier véhicule et le deuxième véhicule, dite valeur de TIV courant, avec une valeur seuil déterminée. Enfin, le système ACC est contrôlé en fonction du résultat de la sélection, c'est-à-dire que le système ACC est contrôlé en prenant le deuxième véhicule comme véhicule cible lorsque ce dernier est sélectionné et le système ACC est contrôlé en prenant un autre véhicule, ou aucun véhicule, comme véhicule cible lorsque le deuxième véhicule n'est pas sélectionné.

La détection de l'actionnement des clignotants du premier véhicule permet de prendre en considération une intention de changement de voie de circulation dans le contrôle du système ACC. La détermination d'une portion de la deuxième route n'appartenant pas à la trajectoire du premier véhicule permet de contrôler le système ACC du premier véhicule en prenant un deuxième véhicule présent dans cette portion de la deuxième route en fonction de critères relatifs aux vitesses des deux véhicules et du temps inter-véhicules entre ces véhicules.

La figure 1 illustre schématiquement un premier véhicule 10 circulant sur une portion de route d'un environnement 1, selon un exemple de réalisation particulier et non limitatif de la présente invention.

La figure 1 illustre un premier véhicule 10, par exemple un véhicule automobile, embarquant un ou plusieurs capteurs configurés pour détecter la présence d'objets dans l'environnement 1 du premier véhicule 10. Selon d'autres exemples, le premier véhicule 10 correspond à un car, un bus, un camion, un véhicule utilitaire ou une motocyclette, c'est-à-dire à un véhicule de type véhicule terrestre motorisé.

Le premier véhicule 10 correspond à un véhicule circulant sous la supervision totale d'un conducteur ou circulant dans un mode autonome ou semi-autonome. Le premier véhicule circule selon un niveau d'autonomie égale à 0 ou selon un niveau d'autonomie allant de 1 à 5 par exemple, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Selon l'exemple de la figure 1, le premier véhicule 10 circule sur une portion de route à deux voies de circulations 1001, 1002. Le premier véhicule 10 circule par exemple sur la voie de circulation de droite 1001, dite première voie de circulation, les deux voies de circulation 1001 et 1002 étant adjacentes selon un même sens de circulation. La première voie de circulation 1001 correspond par exemple à la voie de circulation considérée comme étant la plus lente et la voie de circulation de gauche 1002, dite deuxième voie de circulation, correspond à la voie de circulation considérée comme étant la plus rapide.

La première voie de circulation 1001 est séparée ou se démarque de la deuxième voie de circulation 1002 par une ligne de marquage au sol 1000, laquelle ligne correspond par exemple à une ligne en traits pointillés (ligne discontinue).

Les notions de droite et de gauche sont définies selon le sens de circulation du premier véhicule 10. La voie de circulation « la plus lente » est à droite dans les pays où les véhicules circulent sur la voie de droite (pays tels que la France par exemple). La voie de circulation « la plus lente » est à gauche dans les pays où les véhicules circulent sur la voie de gauche (pays tels que le Royaume-Uni par exemple).

Selon l'exemple de la figure 1, un deuxième véhicule 11 circule sur la deuxième voie de circulation 1002, devant le premier véhicule 10 et dans la même direction que le premier véhicule 10. Le deuxième véhicule 11 circule à une distance déterminée du premier véhicule 10, laquelle distance peut varier dans le temps (en fonction du comportement dynamique du premier véhicule 10 et du deuxième véhicule 11).

Le premier véhicule 10 embarque par exemple un ou plusieurs des capteurs suivants :

- un ou plusieurs radars à ondes millimétriques arrangés sur le premier véhicule 10, par exemple à l'avant, à l'arrière, sur chaque coin avant/arrière du véhicule ; chaque radar est adapté pour émettre des ondes électromagnétiques et pour recevoir les échos de ces ondes renvoyées par un ou plusieurs objets (par exemple le deuxième véhicule 11 situé devant le premier véhicule 10 selon l'exemple de la figure 1), dans le but de détecter des obstacles et leurs distances vis-à-vis du premier véhicule 10 ; et/ou
- un ou plusieurs LIDAR(s) (de l'anglais « Light Detection And Ranging », ou « Détection et estimation de la distance par la lumière » en français), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets (par exemple le deuxième véhicule 11) situés dans le faisceau lumineux émis et de mesurer la distance entre le capteur et chaque objet détecté ; et/ou
- une ou plusieurs caméras (associées ou non à un capteur de profondeur) pour l'acquisition d'une ou plusieurs images de l'environnement autour du premier véhicule 10 se trouvant dans le champ de vision de la ou les caméras.

Les données obtenues de ce ou ces capteurs varient selon le type de capteur. Lorsqu'il s'agit d'un radar ou d'un LIDAR, les données correspondent par exemple à des données de distance entre des points de l'objet détecté et le capteur. Chaque objet détecté est ainsi représenté par un nuage de points (chaque point correspondant à un point de l'objet recevant le rayonnement émis par le capteur et réfléchissant au moins en partie ce rayonnement), le nuage de points représentant l'enveloppe (ou une partie de l'enveloppe) de l'objet détecté tel que vu par le capteur et in fine par le véhicule 10 embarquant le capteur. Lorsqu'il s'agit d'une caméra vidéo, les données correspondent à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »). Ces données permettent par exemple de déterminer les positions successives prises par un objet se déplaçant dans l'environnement 1, par exemple le deuxième véhicule 11, et d'en déduire un ou plusieurs paramètres dynamiques de l'objet mobile tels que la vitesse et/ou l'accélération. Ces données permettent également de déterminer les lignes au sol pour par exemple participer à la détermination d'appartenance du deuxième véhicule 11 et du premier véhicule 10 à une même voie de circulation par exemple.

Les données acquises par le ou les capteurs embarqués alimentent par exemple un ou plusieurs systèmes d'aide à la conduite, dit ADAS (de l'anglais « Advanced Driver-Assistance System » ou en français « Système d'aide à la conduite avancé ») embarqués dans le premier véhicule 10. Un tel système ADAS est configuré pour assister, voire remplacer, le conducteur du premier véhicule 10 pour contrôler le premier véhicule 10 sur son parcours.

Selon un exemple de réalisation, le premier véhicule 10 embarque un système ADAS correspondant à un système de régulation automatique de la vitesse, dit système ACC. Lorsque le système ACC est activé, le système ACC a pour objectif de réaliser une accélération de consigne, appelée $A_{consigne}(t)$, qui varie au cours du temps 't' et qui permet de maintenir ou atteindre une vitesse de régulation et/ou de maintenir une distance de sécurité déterminée vis-à-vis du deuxième véhicule 11 en amont du premier véhicule 10, c'est à dire d'un véhicule cible circulant devant le premier véhicule 10 dans le même sens de circulation sur la même voie de circulation. Les données obtenues du ou des capteurs embarqués dans le premier véhicule 10 permettent au système ACC du premier véhicule 10 d'établir une valeur cible d'accélération $A_{cible}(t)$ au cours du temps 't'. L'accélération cible $A_{cible}(t)$ devient une consigne d'accélération $A_{consigne}(t)$. Le système ACC ou un calculateur de ce système transmet par exemple les consignes d'accélérations $A_{consigne}(t)$ qu'il a déterminé au(x) calculateur(s) supervisant le fonctionnement d'un groupe motopropulseur du premier véhicule 10, notamment pour que ce(s) dernier(s) détermine(nt) les consignes de couple à générer par le groupe motopropulseur pour respecter les consignes d'accélération $A_{consigne}(t)$ et réguler la vitesse du premier véhicule 10.

Une valeur d'accélération cible est par exemple déterminée à un instant courant t à partir d'un ensemble de données obtenues d'un ou plusieurs capteurs de détection d'objet embarqués dans le premier véhicule 10 et/ou de paramètres de consigne entrés par exemple par le conducteur ou déterminés à partir de données sur l'environnement du premier véhicule 10. La valeur d'accélération cible (exprimée en $m.s^{-2}$) est par exemple calculée à partir de paramètres de consignes fournis au système ACC, tels que par exemple une vitesse cible, une distance ou un temps inter-véhicule (DIV ou TIV) cible, ces paramètres étant enregistrés en mémoire, déterminés par analyse de l'environnement (par exemple la vitesse cible est déterminée par lecture des panneaux de limitation de vitesse ou à partir de données reçus d'un système de navigation) ou entrés par un utilisateur via une interface Homme-Machine, dite IHM.

Selon un mode de réalisation particulier, le premier véhicule 10 embarque en outre un système de changement semi-automatique de voie de circulation, dit système SALC (de l'anglais « Semi-Automatic Lane Change »). Un tel système se base notamment sur la détection et la reconnaissance des lignes de marquage au sol pour autoriser ou non le changement de voie d'une voie de circulation courante vers une voie de circulation adjacente à cette voie de circulation courante, et lorsque le changement est autorisé, pour contrôler la manœuvre permettant au premier véhicule 10 de changer de voie.

Le premier véhicule 10 embarque par exemple en outre un système de détection de marquage au sol. Un tel système est par exemple couplé au système SALC ou intégré au système SALC. Un tel système de détection de marquage au sol reçoit des données d'une ou plusieurs premières caméras embarquées dans le premier véhicule 10 et configurées pour l'acquisition d'images de la voie de circulation empruntée par le premier véhicule 10, par exemple la portion de route située à l'avant et/ou sur les côtés du premier véhicule 10. Le système de détection de marquage au sol est ainsi configuré pour détecter les marquages au sol dans l'environnement du premier véhicule 10. Un traitement d'image est appliqué aux images obtenues de la ou les premières caméras du système de détection de marquage au sol pour déterminer la présence de lignes au sol et de classifier ces lignes en différentes catégories, par exemple pour déterminer si les lignes au sol correspondent à des lignes de rive ou des lignes médianes par exemple. Un exemple de traitement d'image pour détecter les lignes au sol est par exemple décrit dans le document WO2017194890A1.

Un processus de contrôle du système ACC du premier véhicule 10 est avantageusement mis en œuvre par le premier véhicule 10, c'est-à-dire par un calculateur ou une combinaison de calculateurs du système embarqué du premier véhicule 10, par exemple par le ou les calculateurs en charge de contrôler le système ACC.

Dans une première opération, le déclenchement d'un ou plusieurs clignotants latéraux, par exemple les clignotants gauches 101 du premier véhicule 10, est détecté ou une information représentative du déclenchement des clignotants est reçue par le calculateur en charge du processus.

Un feu clignotant (aussi appelé clignotant) correspond avantageusement à un éclairage utilisé pour indiquer ou signaler un changement de direction (par exemple vers la droite (respectivement vers la gauche) lorsque le ou les feux clignotants droit (respectivement gauche) sont activés).

L'éclairage d'un feu clignotant est généralement de couleur orange et un feu clignotant, lorsqu'il est activé, émet de la lumière de manière discontinue. La fréquence des clignotements est par exemple comprise entre 60 et 120 clignotements par minute, par exemple 90 clignotements par minute.

Le déclenchement des clignotants gauches 101 du premier véhicule 10 est ainsi représentatif d'une intention du premier véhicule 10 (par exemple de son conducteur) de changer de voie de circulation pour passer sur la deuxième voie de circulation 1002 située à gauche de la première voie de circulation 1001 du premier véhicule 10, laquelle première voie 1001 correspond à la voie de circulation courante du premier véhicule 10 à un instant courant, lequel instant courant correspond par exemple à l'instant auquel l'activation des clignotants 101 est détectée.

Les feux clignotants du premier véhicule 10 sont avantageusement contrôlés par un ou plusieurs calculateurs du système embarqué du premier véhicule 10. Le système embarqué du premier véhicule 10 comprend un ensemble de calculateurs reliés entre eux par un ou plusieurs bus de communication. Ces calculateurs forment par exemple une architecture multiplexée pour la réalisation de différents services utiles pour le bon fonctionnement du premier véhicule 10 et pour assister le conducteur et/ou les passagers du véhicule dans le contrôle du premier véhicule 10, par exemple en contrôlant le système ACC et/ou l'activation et la désactivations de chacun des feux clignotants du véhicule en fonction de signaux de commande reçus d'organes de commande arrangés par exemple dans l'habitacle du premier véhicule 10, ces signaux de commande circulant sur l'architecture multiplexée. Les calculateurs échangent des données entre eux par l'intermédiaire d'un ou plusieurs bus informatiques, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458) ou Ethernet (selon la norme ISO/IEC 802-3).

La détection de l'activation des clignotants 1001 est ainsi par exemple obtenue par la réception d'une information filaire de type binaire acquise par le calculateur ou le boitier de servitude intelligent, dit BSI, du premier véhicule 10 lorsque cette information est transmise sur le réseau filaire, par exemple le bus de données, du système embarqué du premier véhicule 10. Une telle information correspond à une valeur binaire prenant une première valeur lorsque les clignotants sont actifs ou activés et une deuxième valeur lorsque les clignotants sont inactifs ou désactivés. Une telle information est par exemple transmise par le BSI au calculateur en charge du processus via le bus de données reliant ces deux calculateurs.

Dans une deuxième opération, le point d'intersection 1010 entre d'une part la ligne de marquage au sol 1000 séparant la première voie de circulation 1001 de la deuxième voie de circulation 1002 et d'autre part une trajectoire 100 du premier véhicule 10 représentative du changement de voie de circulation du premier véhicule 10 est déterminé.

La détermination du point d'intersection 1010 comprend par exemple la détermination des coordonnées du point d'intersection 1010 dans un repère orthonormé (X,Y) associé au véhicule, X représentant l'axe longitudinal du premier véhicule 10 et Y l'axe transversal orthogonal à l'axe longitudinal X.

La deuxième opération comprend par exemple une opération de détection de la ligne de marquage au sol 1000 et une opération de détermination de la trajectoire 100 du premier véhicule 10 pour changer de voie de circulation, ces deux opérations étant l'une et l'autre mises en œuvre selon toutes méthodes connues de l'homme du métier.

Par exemple, la détection de la ligne de marquage au sol 1000 est obtenue par le système de détection de marquage au sol embarqué dans le premier véhicule 10 à partir des données obtenues d'une ou plusieurs caméras du premier véhicule 10.

Une représentation polynomiale de la ligne 1010 est par exemple déterminée ou calculée à partir des données obtenues de la caméra embarquée dans le premier véhicule 10.

La ligne de marquage au sol 1000 est par exemple représentée par un polynôme de degré 3 sous la forme $P(x) = C_0 + C_1 * x + C_2 * x^2 + C_3 * x^3$, avec $C_0$, $C_1$, $C_2$ et $C_3$ les coefficients du polynôme, chaque terme $C_0$, $C_1 * x$, $C_2 * x^2$ et $C_3 * x^3$ du polynôme correspondant à un monôme du polynôme, le terme C0 correspondant au monôme de degré 0 (correspondant à $C_0 * x^0$) et $C_0$ étant le coefficient associé à ce monôme de degré 0. De la même manière, $C_1 * x$ correspond au monôme de degré 1 (avec $C_1$ son coefficient), $C_2 * x^2$ correspond au monôme de degré 2 (avec $C_2$ son coefficient) et $C_3 * x^3$ correspond au monôme de degré 3 (avec $C_3$ son coefficient).

Les coefficients $C_0$, $C_1$, $C_2$ et $C_3$ sont issus de la ou les premières caméras embarquées du véhicule 10 ou du système de détection de marquage au sol utilisant des images issues de cette ou ces caméras.

Le coefficient $C_0$ représente par exemple une distance entre le centre du premier véhicule 10 (ou tout autre point de référence du véhicule 10) et la ligne de marquage au sol 1000. Le coefficient $C_1$ représente un angle entre la trajectoire du premier véhicule 10 et une tangente à la voie de circulation (le cap). Le coefficient $C_2$ représente un rayon de courbure et le coefficient $C_3$ représente une dérivée de ce rayon de courbure.

La détermination de la trajectoire de changement de voie du premier véhicule 10 comprend par exemple la détermination d'une représentation de cette trajectoire.

La détermination de la trajectoire 100 est par exemple calculée par le système SALC lorsque le changement de voie est effectué sous le contrôle du système SALC.

La trajectoire 100 est par exemple déterminée en fonction de données représentatives d'accélération latérale 'A$_{lat}$' (selon l'axe Y) du premier véhicule 10 et de données représentatives d' vitesse longitudinale 'V$_x$' (selon l'axe X) du premier véhicule 10 lorsque le changement de voie est effectué sous le contrôle du conducteur du premier véhicule 10.

La trajectoire est par exemple représentée sous la forme de l'équation suivante, avec x et y les positions du premier véhicule 10 dans le repère (X,Y) :

[Math 1]

$$y = \frac{A_{lat}}{2 * V_x^2} * x^2$$

L'intersection 1010 est ainsi calculée à partir de la représentation de la trajectoire 100 et de la représentation de la ligne de marquage au sol 1000.

Dans une troisième opération, une portion 110 de la deuxième voie de circulation 1002 correspondant au tronçon de la deuxième voie de circulation comprise entre la position courante du premier véhicule 10 et le point d'intersection 1010 est déterminée. Cette portion est par exemple représentée par un rectangle avec deux côtés transversaux (le long de l'axe Y) opposés et parallèles et deux côtés longitudinaux (le long de l'axe X) opposés et parallèles, les côté transversaux correspondant à :

- un premier segment de droite orthogonal à la ligne 1000 et ayant pour extrémité le point d'intersection 1010 et le point de la ligne de rive délimitant l'autre bord de la deuxième portion de route 1002 ; et
- un deuxième segment de droite parallèle au premier segment de droite et obtenu par le prolongement d'une ligne représentant le premier véhicule 10 selon l'axe Y (par exemple une ligne passant par l'essieu avant du premier véhicule 10) et ayant pour extrémité l'intersection entre cette ligne et la ligne 1010 et la ligne de rive.

Cette portion 110 évolue au fur et à mesure du déplacement du premier véhicule 10 le long de la trajectoire 100.

Dans une quatrième opération, un deuxième véhicule 11 circulant dans la portion 110 de la deuxième voie de circulation 1002 est détecté à partir des données obtenues d'un ou plusieurs des capteurs embarqués dans le premier véhicule 10, par exemple par un ou plusieurs radars.

Dans une cinquième opération, la vitesse courante du deuxième véhicule 11, notée 'V11' est comparée à la vitesse courante du premier véhicule 10, notée 'V10', ajustée d'une valeur de vitesse déterminée (et par exemple stockée en mémoire du système ACC), notée '$\varepsilon_V$'. Ainsi, V11 est comparée à (V10 + $\varepsilon v$).

Dans cette cinquième opération, une valeur représentative du temps inter-véhicules (appelée valeur de TIV par la suite) entre le premier véhicule 10 et le deuxième véhicule 11, notée '$TIV_{courant}$', est comparée à une valeur seuil déterminée (et par exemple stockée en mémoire du système ACC), notée '$TIV_{min}$'.

La valeur de TIV correspond à un paramètre de contrôle ou de consigne du système ACC et correspond au temps inter-véhicules (exprimé en secondes) ou à la distance inter-véhicules (exprimée en mètres). Le TIV et le DIV sont corrélés l'un à l'autre avec la vitesse 'V' du premier véhicule 10 selon la formule suivante : TIV = DIV / V.

Selon le résultat de ces deux comparaisons, le deuxième véhicule 11 est sélectionné ou non comme étant le véhicule cible du système ACC.

Ainsi, lorsque les deux conditions suivantes sont vérifiées ou remplies :

- V11 est supérieure à (V10+ $\varepsilon_V$) (soit V11 > V10+ $\varepsilon_V$) ; et
- $TIV_{courant}$ est supérieur à $TIV_{min}$ (soit $TIV_{courant}$ > $TIV_{min}$).

alors le deuxième véhicule 11 est sélectionné comme étant le véhicule cible du système ACC du premier véhicule 10.

Sinon, le le deuxième véhicule 11 n'est pas sélectionné comme étant le véhicule cible du système ACC du premier véhicule 10, c'est-à-dire lorsqu'une des (ou les deux) conditions suivantes est vérifiée ou remplie :

- V11 est inférieure ou égale à (V10+ $\varepsilon v$) (soit V11 $\leq$ V10+ $\varepsilon_V$) ; ou
- TIVcourant est inférieur ou égal à $TIV_{min}$ (soit $TIV_{courant} \leq$ TIVmin).

A titre d'exemple non-limitatif :

-

$$\varepsilon_V = -5 \text{ km/h ou à } \varepsilon_V = -10 \text{ km/h ;}$$

et

-

$$TIV_{min} = 0.4 \text{ s ou } TIV_{min} = 0.5 \text{ s.}$$

Bien entendu, les paramètres peuvent prendre d'autres valeurs, par exemple la valeur de vitesse déterminée $\varepsilon_V$ est par exemple égale à 0 ou 5 km/h et la valeur seuil $TIV_{min}$ est par exemple égale à 0.3 ou 0.6 s.

Selon une variante de réalisation, la valeur de vitesse déterminée $\varepsilon_V$ est fonction du type de la deuxième voie de circulation 1002, le type de la voie de circulation correspondant à :

- 'plus rapide' pour une deuxième voie de circulation 1002 plus rapide que la première voie de circulation 1001 ; ou
- 'moins rapide' pour une deuxième voie de circulation 1002 moins rapide que la première voie de circulation 1001.

Ainsi, le paramètre $\varepsilon_V$ (dit valeur de vitesse déterminée) pour une deuxième voie de circulation 1002 de type 'plus rapide' prend comme valeur une valeur supérieure à celle prise par ce paramètre $\varepsilon_V$ pour une deuxième voie de circulation 1002 de type 'moins rapide'.

Dans une sixième opération, le système ACC du premier véhicule 10 est contrôlé en fonction du résultat de la sélection obtenue à la cinquième opération.

Par exemple, lorsque le deuxième véhicule 11 est sélectionné comme véhicule cible du système ACC, alors le système ACC est contrôlé en fonction du deuxième véhicule 11.

Par exemple, le système ACC est contrôlé en prenant comme valeur de TIV la valeur correspondant au minimum entre la valeur de TIV courant ($TIV_{courant}$) et une valeur de TIV de consigne, notée $TIV_{consigne}$. Le $TIV_{courant}$ correspond à la valeur de TIV mesurée ou déterminée entre le premier véhicule 10 et le deuxième véhicule 11 à un instant courant à partir de l'instant auquel l'activation des clignotants 101 a été détectée (cette valeur de $TIV_{courant}$ variant en fonction du déplacement du premier véhicule 10 et du déplacement du deuxième véhicule 11) jusqu'à ce que le premier véhicule 10 franchisse la ligne 1000. La valeur de TIV de consigne correspond par exemple à un paramètre par défaut du système ACC (par exemple égale à 1 ou 2 s) ou à un paramètre fixé par le conducteur du premier véhicule 10 via une interface homme-machine ad hoc (et par exemple comprise entre 1 et 2 s ou entre 1 et 3 s).

Ainsi, la vitesse du premier véhicule 10 est contrôlée en fonction d'un temps inter-véhicule, noté TIV, lequel TIV = min($TIV_{courant}$, $TIV_{consigne}$).

Lorsque le deuxième véhicule 11 n'est pas sélectionné comme étant le véhicule cible du système ACC, alors le système ACC prend comme véhicule cible un autre véhicule (par exemple un véhicule circulant devant le premier véhicule 10 dans la première voie de circulation 1001) ou ne prend aucun véhicule comme véhicule cible, la vitesse du premier véhicule 10 étant contrôlée en fonction d'un paramètre du système ACC correspondant à une vitesse de consigne choisie par exemple par le conducteur du premier véhicule 10.

Un tel processus permet de sélectionner un deuxième véhicule 11 circulant dans la voie de destination du premier véhicule, dans une zone non couverte par la trajectoire de changement de voie du premier véhicule 10, à une vitesse proche de celle du premier véhicule 10 (par exemple légèrement inférieure) et avec un TIV supérieur à un seuil. Un tel processus permet ainsi d'éviter de freiner sur les objets (véhicules) plus lents que le premier véhicule 10 ou trop prêts du premier véhicule 10, ainsi que, lors d'un mouvement latéral du premier véhicule 10 (lors d'un changement de voie), d'éviter un freinage trop important du premier véhicule 10 pour se mettre au TIV de consigne.

La figure 2 illustre schématiquement un dispositif 2 configuré pour contrôler le système ACC d'un véhicule, par exemple du premier véhicule 10, selon un exemple de réalisation particulier et non limitatif de la présente invention. Le dispositif 2 correspond par exemple à un dispositif embarqué dans le premier véhicule 10, par exemple un calculateur.

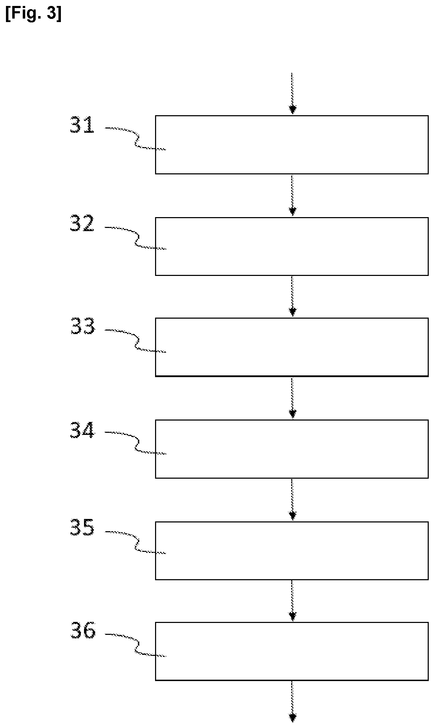

Le dispositif 2 est par exemple configuré pour la mise en œuvre des opérations décrites en regard de la figure 1 et/ou des étapes du procédé décrit en regard de la figure 3. Des exemples d'un tel dispositif 2 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 21.

Selon différents exemples de réalisation particuliers et non limitatifs, le dispositif 2 est couplé en communication avec d'autres dispositifs ou systèmes similaires (par exemple d'autres calculateurs) et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 2 comprend un bloc 22 d'éléments d'interface pour communiquer avec des dispositifs externes. Les éléments d'interface du bloc 22 comprennent une ou plusieurs des interfaces suivantes :

- interface radiofréquence RF, par exemple de type Wi-Fi® (selon IEEE 802.11), par exemple dans les bandes de fréquence à 2,4 ou 5 GHz, ou de type Bluetooth® (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
  interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 2 comprend une interface de communication 23 qui permet d'établir une communication avec d'autres dispositifs (tels que d'autres calculateurs du système embarqué) via un canal de communication 230. L'interface de communication 23 correspond par exemple à un transmetteur configuré pour transmettre et recevoir des informations et/ou des données via le canal de communication 230. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 2 peut fournir des signaux de sortie à un ou plusieurs dispositifs externes, tels qu'un écran d'affichage, tactile ou non, un ou des haut-parleurs et/ou d'autres périphériques (système de projection) via des interfaces de sortie respectives. Selon une variante, l'un ou l'autre des dispositifs externes est intégré au dispositif 2.

La figure 3 illustre un organigramme des différentes étapes d'un procédé de contrôle d'un système ACC d'un véhicule, par exemple du premier véhicule 10, selon un exemple de réalisation particulier et non limitatif de la présente invention. Le procédé est par exemple mis en œuvre par un dispositif embarqué dans le premier véhicule 10 ou par le dispositif 2 de la figure 2.

Dans une première étape 31, un déclenchement d'au moins un clignotant du premier véhicule est détecté, le déclenchement étant représentatif d'une indication de changement de voie de circulation depuis la première voie de circulation vers la deuxième voie de circulation.

Dans une deuxième étape 32, un point d'intersection est déterminé entre une ligne de marquage au sol séparant la première voie de circulation de la deuxième voie de circulation et une trajectoire du premier véhicule représentative du changement de voie de circulation.

Dans une troisième étape 33, une portion de la deuxième voie de circulation comprise entre une position courante du premier véhicule et le point d'intersection est déterminée.

Dans une quatrième étape 34, un deuxième véhicule circulant dans la portion de la deuxième voie de circulation est détecté.

Dans une cinquième étape 35, le deuxième véhicule est sélectionné ou non comme véhicule cible dudit système ACC en fonction d'un résultat d'une comparaison entre d'une part une vitesse courante du deuxième véhicule avec une vitesse courante du premier véhicule ajusté d'une valeur de vitesse déterminée et d'autre part une valeur représentative d'un temps inter-véhicules courant entre le premier véhicule et le deuxième véhicule, dite valeur de TIV courant, avec une valeur seuil déterminée.

Dans une sixième étape 36, le système ACC est contrôlé en fonction d'un résultat de la sélection.

Selon une variante, les variantes et exemples des opérations décrits en relation avec la figure 1 s'appliquent aux étapes du procédé de la figure 3.

La présente invention concerne également un système de régulation adaptative de vitesse pour véhicule comprenant le dispositif 2 de la figure 2.

La présente invention concerne également un véhicule, par exemple automobile ou plus généralement un véhicule autonome à moteur terrestre, comprenant le dispositif 2 de la figure 2 ou le système de régulation adaptative de vitesse pour véhicule ci-dessus.

**Revendications**

**1.** Procédé de contrôle d'un système de régulation adaptative de vitesse, dit système ACC, d'un premier véhicule (10), ledit premier véhicule (10) circulant sur une première voie de circulation (1001) d'une portion de route comprenant en outre une deuxième voie de circulation (1002) adjacente à ladite première voie de circulation (1001), ledit procédé comprenant les étapes suivantes :

- détection (31) d'un déclenchement d'au moins un clignotant (101) dudit premier véhicule (10), ledit déclenchement étant représentatif d'une indication de changement de voie de circulation depuis ladite première voie de circulation (1001) vers ladite deuxième voie de circulation (1002) ;
- détermination (32) d'un point d'intersection (1010) entre une ligne (1000) de marquage au sol séparant ladite première voie de circulation (1001) de ladite deuxième voie de circulation (1002) et une trajectoire (100) dudit premier véhicule (10) représentative dudit changement de voie de circulation ;
- détermination (33) d'une portion (110) de ladite deuxième voie de circulation (1002) comprise entre une position courante dudit premier véhicule (10) et ledit point d'intersection (1010) ;
- détection (34) d'un deuxième véhicule (11) circulant dans ladite portion (110) de ladite deuxième voie de circulation (1002) ;
- sélection (35) dudit deuxième véhicule (11) comme véhicule cible dudit système ACC en fonction d'un résultat d'une comparaison entre d'une part une vitesse courante dudit deuxième véhicule (11) avec une vitesse courante dudit premier véhicule (10) ajustée d'une valeur de vitesse déterminée et d'autre part une valeur représentative d'un temps inter-véhicules courant entre ledit premier véhicule (10) et ledit deuxième véhicule (11), dite valeur de TIV courant, avec une valeur seuil déterminée ;
- contrôle (36) dudit système ACC en fonction d'un résultat de ladite sélection (35).

**2.** Procédé selon la revendication 1, pour lequel ledit deuxième véhicule (11) est sélectionné comme véhicule cible dudit système ACC lorsque :

- ladite vitesse courante dudit deuxième véhicule (11) est supérieure à ladite vitesse courante dudit premier véhicule (10) ajustée de ladite valeur de vitesse déterminée ; et
- ladite valeur de TIV courant est supérieure à ladite valeur seuil déterminée.

**3.** Procédé selon la revendication 1 ou 2, pour lequel, lorsque ledit deuxième véhicule (11) est sélectionné comme véhicule cible dudit système ACC, ledit contrôle dudit système ACC comprend une régulation de vitesse dudit premier véhicule (10) avec une valeur de TIV égale au minimum entre ladite valeur de TIV courant et une valeur représentative d'un temps inter-véhicules de consigne du système ACC.

**4.** Procédé selon l'une des revendications 1 à 3, pour lequel ladite valeur de vitesse déterminée est fonction d'un type de ladite deuxième voie de circulation, ledit type de ladite voie de circulation correspondant à :

- 'plus rapide' pour une deuxième voie de circulation (1002) plus rapide que ladite première voie de circulation (1001) ; ou
- 'moins rapide' pour une deuxième voie de circulation (1002) moins rapide que ladite première voie de circulation (1001).

**5.** Procédé selon la revendication 4, pour lequel une valeur de vitesse déterminée pour une deuxième voie de circulation de type 'plus rapide' est supérieure à une valeur de vitesse déterminée pour une deuxième voie de circulation de type 'moins rapide'.

**6.** Procédé selon l'une des revendications 1 à 5, pour lequel :

- ladite valeur de vitesse déterminée est égale à -5 km/h ou à -10 km/h ; et/ou
- ladite valeur seuil déterminée est égale à 0.4 s ou 0.5 s.

**7.** Procédé selon l'une des revendications 1 à 6, comprenant en outre les étapes de :

- détection de ladite ligne (1000) de marquage au sol à partir de données caméra obtenues d'au moins une caméra embarquée dans ledit premier véhicule (10) ; et
- détermination de ladite trajectoire (100) en fonction de données représentatives d'une accélération latérale dudit premier véhicule (10) et de données représentatives d'une vitesse longitudinale dudit premier véhicule (10).

**8.** Programme d'ordinateur comportant des instructions pour la mise en œuvre du procédé selon l'une quelconque des revendications précédentes, lorsque ces instructions sont exécutées par un processeur.

**9.** Dispositif (2) de contrôle d'un système de régulation adaptative de vitesse de véhicule, ledit dispositif (2) comprenant une mémoire (21) associée à au moins un processeur (20) configuré pour la mise en œuvre des étapes du procédé selon l'une quelconque des revendications 1 à 7.

**10.** Véhicule (10) comprenant le dispositif (2) selon la revendication 9.

**Patentansprüche**

**1.** Verfahren zum Steuern eines adaptiven Geschwindigkeitsregelungssystems, ACC-System genannt, eines ersten Fahrzeugs (10), wobei das erste Fahrzeug (10) auf einer ersten Fahrspur (1001) eines Straßenabschnitts fährt, das ferner eine zweite Fahrspur (1002) neben der ersten Fahrspur (1001) umfasst, wobei das Verfahren die folgenden Schritte umfasst:

- Erfassen (31) eines Auslösens mindestens eines Blinkers (101) des ersten Fahrzeugs (10), wobei das Auslösen repräsentativ ist für Fahrspurwechselanzeige von der ersten Fahrspur (1001) zur zweiten Fahrspur (1002);
- Bestimmung (32) eines Schnittpunkts (1010) zwischen einer Bodenmarkierungslinie (1000), die die erste Fahrspur (1001) von der zweiten Fahrspur (1002) trennt, und einer Fahrspur (100) des ersten Fahrzeugs (10), die die Fahrspuränderung darstellt;
- Bestimmung (33) von Teil (110) der zweiten Fahrspur (1002), der zwischen einer aktuellen Position des ersten Fahrzeugs (10) und dem Schnittpunkt (1010) liegt;
- Erfassung (34) eines zweiten Fahrzeugs (11), das in dem Teil (110) der zweiten Fahrspur (1002) fährt;
- Auswahl (35) des zweiten Fahrzeugs (11) als Zielfahrzeug des ACC-Systems in Abhängigkeit von einem Ergebnis eines Vergleichs zwischen einer aktuellen Geschwindigkeit des zweiten Fahrzeugs (11) und einer Laufende Geschwindigkeit des ersten Fahrzeugs (10), eingestellt um einen bestimmten Geschwindigkeitswert und andererseits einen Wert, der eine zwischen dem ersten Fahrzeug (10) und dem zweiten Fahrzeug (11) laufende Zeit darstellt, den so genannten laufenden TIV-Wert, mit einem bestimmten Schwellenwert;
- Steuerung (36) des ACC-Systems in Abhängigkeit von einem Ergebnis der Auswahl (35).

**2.** Verfahren nach Anspruch 1, bei dem das zweite Fahrzeug (11) als Zielfahrzeug des ACC-Systems ausgewählt wird, wenn

- die aktuelle Geschwindigkeit des zweiten Fahrzeugs (11) größer als die aktuelle Geschwindigkeit des ersten Fahrzeugs (10) ist, die um den bestimmten Geschwindigkeitswert eingestellt ist; und
- der aktuelle TIV-Wert größer als der bestimmte Schwellenwert ist.

**3.** Verfahren nach Anspruch 1 oder 2, bei dem, wenn das zweite Fahrzeug (11) als Zielfahrzeug des ACC-Systems ausgewählt wird, die Steuerung des ACC-Systems eine Geschwindigkeitsregelung des ersten Fahrzeugs (10) mit einem TIV-Wert umfasst, der wenigstens gleich dem gegenwärtigen TIV-Wert ist, und einem Wert, der eine Soll-Zeit zwischen Fahrzeugen des ACC-Systems darstellt.

4. Verfahren nach einem der Ansprüche 1 bis 3, bei dem der bestimmte Geschwindigkeitswert eine Funktion eines Typs der zweiten Fahrspur ist, wobei der Typ der Fahrspur entspricht:

   - 'schneller' für eine zweite Fahrspur (1002), die schneller als die erste Fahrspur (1001) ist; oder
   - ‚langsamer' für eine zweite Fahrspur (1002), die langsamer als die erste Fahrspur (1001) ist.

5. Verfahren nach Anspruch 4, bei dem ein bestimmter Geschwindigkeitswert für eine zweite Fahrspur des Typs 'schneller' größer ist als ein bestimmter Geschwindigkeitswert für eine zweite Fahrspur des Typs ‚langsamer'.

6. Verfahren nach einem der Ansprüche 1 bis 5, bei dem :

   - der bestimmte Geschwindigkeitswert gleich -5 km/h oder -10 km/h ist; und/oder
   - der bestimmte Schwellenwert gleich 0,4 s oder 0,5 s ist.

7. Verfahren nach einem der Ansprüche 1 bis 6, das des Weiteren die folgenden Schritte umfasst:

   - Erfassen der Bodenmarkierungslinie (1000) aus Kameradaten, die von mindestens einer Kamera in dem ersten Fahrzeug (10) erhalten wurden; und
   - Bestimmen der Bahn (100) in Abhängigkeit von Daten, die eine seitliche Beschleunigung des ersten Fahrzeugs (10) darstellen, und Daten, die eine Längsgeschwindigkeit des ersten Fahrzeugs (10) darstellen.

8. Computerprogramm mit Anweisungen zur Durchführung des Verfahrens nach einem der vorhergehenden Ansprüche, wenn diese Anweisungen von einem Prozessor ausgeführt werden.

9. Vorrichtung (2) zur Steuerung eines adaptiven Fahrzeuggeschwindigkeitsregelungssystems, wobei die Vorrichtung (2) einen Speicher (21) umfasst, der mit mindestens einem Prozessor (20) verbunden ist, der zur Durchführung der Schritte des Verfahrens nach einem der Ansprüche 1 bis 7 konfiguriert ist.

10. Fahrzeug (10) mit der Vorrichtung (2) nach Anspruch 9.

**Claims**

1. Method for controlling an adaptive speed regulation system, referred to as an ACC system, of a first vehicle (10), said first vehicle (10) travelling on a first taxiway (1001) of a portion of a highway further comprising a second taxiway (1002) adjacent to said first taxiway (1001), said method comprising the steps of:

   - detecting (31) a triggering of at least one indicator (101) of said first vehicle (10), said triggering being representative of an indication of a change of taxiway from said first taxiway (1001) to said second taxiway (1002);
   - determining (32) a point of intersection (10) between a line (1000) marking on the ground separating said first taxiway (1001) from said second taxiway (1002) and a trajectory (100) of said first conveyance (10) representative of said change of taxiway;
   - determination (33) of a portion (110) of said second taxiway (1002) comprised between a current position of said first conveyance (10) and said point of intersection (1010);
   - detection (34) of a second conveyance (11) travelling in said portion (110) of said second taxiway (1002);
   - selection (35) as a target conveyance of said ACC system as a function of a current result (11) with a current speed of said first current (10) adjusted by a determined speed value and, on the other hand, a value representative of an inter-vehicle time between said first vehicle (10) and said second vehicle (11), called the current TIV value, with a determined threshold value;
   - control (36) of said ACC system as a function of a result of said selection (35).

2. Method according to claim 1, wherein said second vehicle (11) is selected as the target vehicle of said ACC system when:

   - said current speed of said second vehicle (11) is greater than said current speed of said first vehicle (10) adjusted by said determined speed value; and
   - said current TIV value is greater than said determined threshold value.

3. Method according to claim 1 or 2, wherein, when said second vehicle (11) is selected as the target vehicle of said ACC system, said control of said ACC system comprises a speed regulation of said first vehicle (10) with a value of TIV equal to the minimum between said value of current TIV and a value representative of a set inter-vehicle time of the ACC system.

4. Method according to one of Claims 1 to 3, for which said determined speed value is a function of a type of said second taxiway, said type of said taxiway corresponding to:

- 'faster' for a second taxiway (1002) faster than said first taxiway (1001); or
- 'slower' for a second taxiway (1002) slower than said first taxiway (1001).

5. Method according to claim 4, wherein a determined speed value for a second « faster » type lane is greater than a determined speed value for a second « slower » type lane.

6. Method according to one of claims 1 to 5, for which:

- said determined speed value is equal to -5 km/h or to -10 km/h; and/or
- said determined threshold value is equal to 0.4 s or 0.5 s.

7. Method according to one of claims 1 to 6, further comprising the steps of:

- detecting said ground marking line (1000) from camera data obtained from at least one camera on board said first vehicle (10); and
- determining said trajectory (100) as a function of data representative of a lateral acceleration of said first vehicle (10) and data representative of a longitudinal speed of said first vehicle (10).

8. Computer plan comprising instructions for the implementation of the method according to any one of the previous claims, when these instructions are executed by a processor.

9. Device (2) for controlling an adaptive vehicle speed regulation system, said device (2) comprising a memory (21) associated with at least one processor (20) configured for implementing the steps of the method according to any one of claims 1 to 7.

10. Vehicle (10) comprising the device (2) according to claim 9.

[Fig. 1]

[Fig. 2]

...

[Fig. 3]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003163239 A1
- US 5999874 A
- US 2017123430 A1
- WO 2017194890 A1